# EUROPEAN PATENT APPLICATION

(11) **EP 4 586 473 A1**
(43) Date of publication of application: **16.07.2025**
(21) Application number: 23862199.9
(22) Date of filing: 25.08.2023
(51) Int. Cl.: H02K 15/085, H02K 15/02

(54) **EXTENSIBLE AUTOMATIC TORSION FORMING DEVICE FOR RECTANGULAR WIRE MOTOR STATOR**

(30) Priority: 06.09.2022 CN 202211081721
(71) Applicant: Comau (Shanghai) Engineering Co., Ltd., Shanghai 201913 (CN)
(72) Inventor: GAO, Yunhui, Shanghai 201913 (CN); SUO, Lei, Shanghai 201913 (CN)
(74) Representative: Buzzi, Notaro & Antonielli d'Oulx S.p.A.
(86) International application number: PCT/CN2023/114992
(87) International publication number: WO 2024/051503

(57) **Abstract**

The invention discloses an automatic twist forming device for an expandable hairpin motor stator, which comprises a worktable which is fixed with an annular spindle device and a plurality of rotating power devices, a plurality of rotating power devices are arranged around the annular spindle device, wherein the annular spindle device comprises a plurality of annular spindles nested in layers, and each annular spindle is connected with a rotating power device which independently drives the rotation of the annular spindle device, the forming mould device comprises a plurality of forming moulds, and each forming mould is one-to-one corresponding to the layer line of the stator winding of the rectangular wire motor, and each forming mould is matched with and detachably connected with a layer of annular spindle; The upper end insulation paper protection mechanism is connected with a z-direction power device which drives the upper end insulation paper protection mechanism to slide up and down, the lower end insulation paper protection mechanism is connected with the z-direction power device of the lower end insulation paper protection mechanism which drives the lower end insulation paper protection mechanism to slide up and down. The invention can greatly reduce the assembly and debugging time and the maintenance time after shutdown, and greatly improve the utilization rate of the production line.

## Description

### TECHNICAL FIELD

The invention relates to an extensible hairpin motor stator automatic twist forming equipment, which belongs to the technical field of hairpin motor stator winding manufacturing.

### BACKGROUND OF THE INVENTION

Our country "13th five-year plan" proposed that the peak power density of new energy vehicle drive motor should reach 4kW/kg, and this is the product level standard. The industry's current average product-grade power density is around 3.2-3.3 kw/kg, which means a power density increase of at least 30% . The hairpin motor is one of the solutions to improve power density. Industry trends for flat wire motor has reached a basic consensus, the reason behind is that its potential is very large.

Although the advantages of hairpin motor are obvious, there are many difficulties in its production process and equipment, which are also the barriers of hairpin motor. Twist forming is one of the core difficult equipment of the rectangular wire stator production line. At present, the disclosed twist forming method requires a high degree of coordination between the twist device and the person. From the outermost line of the winding to the innermost line of the winding, each two layers are bent separately, and the mold needs to be changed for each forming, it needs to twist many times to achieve the effect, the steps are complicated, the hairpin is difficult to enter the twist die, and the consistency of the hairpin after forming is poor.

### SUMMARY OF THE INVENTION

The technical problem to be solved by the invention is how to improve the production efficiency and precision of the hairpin motor.

In order to solve the above technical problems, the technical scheme of the invention is to provide an extensible hairpin motor stator automatic twist forming device, which is characterized in that the device comprises a worktable, a worktable and a worktable, the worktable is fixed with an annular main shaft device and a plurality of rotary power devices, and the plurality of rotary power devices are arranged around the annular main shaft device. A forming mould device is arranged above the annular main shaft device, the annular spindle device comprises a plurality of annular spindles nested layer by layer, each annular spindle is connected with a rotating power device which independently drives the annular spindle to rotate, and the forming mold device comprises a plurality of forming molds, each molding mold is one-to-one corresponding to the layer line of the stator winding of the rectangular wire motor, and each molding mold is matched and detachable connected with a layer of annular spindle. A plurality of Z-direction guide rails are fixed on the annular spindle device, the lower end insulating paper protection mechanism and the upper end insulating paper protection mechanism are arranged on the z-direction guide rails, and the lower end insulating paper protection mechanism is arranged above the forming mold device, the upper end insulation paper protection mechanism is arranged above the lower end insulation paper protection mechanism, and the upper end insulation paper protection mechanism is connected with the z-direction power device which drives the upper end insulation paper protection mechanism to slide up and down, the lower end insulation paper protection mechanism is connected with the z-direction power device of the lower end insulation paper protection mechanism which drives the lower end to slide up and down. The middle of the lower end insulation paper protection mechanism is provided with a through hole which can only be passed by the lower end of the workpiece.

A convex plate is arranged on each molding die, and a groove is arranged on each annular main shaft. The convex plate of each molding die is matched with the groove of the corresponding annular main shaft.

Each of the rotating power devices comprises a servo actuator and a pinion which is connected with the rotating end of the servo actuator; One end of each annular main shaft of the annular main shaft device is connected with the corresponding forming mold on the forming mold device, and the other end of each annular main shaft is respectively connected with a fan tooth; The pinions on each rotating power unit are meshed separately with the sector teeth corresponding to different layers on the annular spindle unit.

The annular main shaft has a tubular structure, and each annular main shaft is corresponding to a forming mold, so that the forming mold rotates circumferentially along the stator of the hairpin motor; Each annular spindle is positioned and stacked layer by layer by means of bearing shoulder.

High-precision bearings for positioning are arranged at the bottom and top of the annular spindle described in each layer.

The other end of the plurality of Z-direction guide rails is connected together by a fixing plate, and the z-direction power device of the upper end insulating paper protection mechanism and the z-direction power device of the lower end insulating paper protection mechanism are at least two respectively; The driving end of the z-direction power device of the upper end insulating paper protection mechanism is connected with the upper end insulating paper protection mechanism, and the z-direction power device of the upper end insulating paper protection mechanism is fixed on the fixing plate; The driving end of the z-direction power device of the lower end insulation paper protection mechanism is connected with the lower end insulation paper protection mechanism, and the z-direction power device of the lower end insulation paper protection mechanism is fixed on the upper end insulation paper protection mechanism.

A bolt for positioning the stator of the motor is embedded on the lower end insulation paper protection mechanism.

A motor stator is arranged between the upper end insulation paper protection mechanism and the lower end insulation paper protection mechanism; The upper insulation paper protection mechanism and the lower insulation paper protection mechanism are driven to clamp the motor stator located in the middle by the z-direction power device of the upper insulation paper protection mechanism and the z-direction power device of the lower insulation paper protection mechanism, the upper end insulation paper protection mechanism and the lower end insulation paper protection mechanism move with the motor stator towards the forming mold device until the motor stator is top on the forming mold device.

The middle position of the bottom of the upper end insulation paper protection mechanism is provided with an inner support mechanism, and the middle position of the upper end insulation paper protection mechanism is provided with a through hole for the driving end of the inner support power device to pass through, the driving end of the inner support power device passes through the upper end insulation paper protection mechanism and is connected with the inner support mechanism. The inner support mechanism is arranged in the iron core of the motor stator. The inner support power device drives the inner support mechanism to tighten in the motor stator.

The power device of the lower end insulation paper protection mechanism, the power device of the upper end insulation paper protection mechanism, the insulation paper protection mechanism and the paper protection teeth are also included The power device of the lower end insulation paper protection mechanism drives the insulation paper protection mechanism to insert the paper protection teeth between each two adjacent wire slots; The power device of the upper end insulation paper protection mechanism drives the insulation paper protection mechanism to insert the paper protection teeth between each two adjacent wire slots.

The invention has the advantages of simple and compact structure, convenient debugging, easy maintenance, easy operation, high production efficiency and low use cost. The modular, fastener-free connection design provides an easy-to-expand, high-flexibility solution, it can be flexibly adapted to the robot automatic feeding or the truss manipulator automatic feeding between the upper end insulation paper protection mechanism and the lower end insulation paper protection mechanism, which is suitable for mass automatic production line. It meets the servo drive requirements of complex actions in the molding of multi-layer rectangular stator products, and can complete the one-time molding of different wire layers of windings, saving working steps, it has the characteristics of high speed, high efficiency, high precision and high yield. The device of the invention has the advantages of vertical layout structure, small occupation area, convenient type change, and key parts installed on the periphery of the device, which is convenient for debugging and maintenance.

The invention adopts multi-axis linkage to realize one-time forming, which has the advantages of high forming precision, reliable action, short forming time, and independently adjustable twist angle of each layer of hairpin, so as to perfectly meet the needs of mass production.

NC system (numerical control system) control, each layer of annular spindle has independent servo control, power transmission for gear, one-way twist technology to eliminate gear clearance, high precision molding.

Compared with the prior art, the invention has the advantages that:
The multi-layer hairpin is fully automatic once forming, the forming process is servo controlled, the forming effect is good, the forming precision is high, and the shape consistency of the formed hairpin is ensured.

The invention has the advantages of integral vertical arrangement, compact structure, small occupied space and convenient arrangement in the production line, and can shorten the length of the automatic loading and unloading facilities, thereby reducing the investment cost of the production line, and the energy consumption of the facility is reduced.

The servo drive of the invention is convenient to adjust, and the stator is easy to manufacture and debug. The precision of each parallel driving unit is independently adjusted. This greatly shortens the debugging time, as soon as possible to start production to shorten the payback period of investment.

The modular design of the invention is simple in installation, convenient in debugging and convenient in maintenance. Can greatly reduce the Assembly and debugging time, as well as the maintenance time after shutdown, greatly improve the utilization rate of the production line.

### BRIEF DESCRIPTION OF THE DRAWINGS

Fig. 1 is an axonometric drawing (1) of the twist forming device of the invention;
Fig. 2 is the axonometric drawing (2) of the twist forming apparatus of the invention;
Fig. 3 is the front view of the twist forming equipment of the invention;
Fig. 4 is the section view of the twist forming equipment of the invention;
Fig. 5 is a cutaway view of the annular spindle unit
Fig. 6 is an axonometric view of the moulding device
Fig. 7 is an axonometric drawing of the annular spindle unit;
Fig. 8 is a diagram of the change of the copper wire of the rectangular stator during twist forming
Fig. 9 is the schematic diagram of Z-axis compensation mechanism
Fig. 10 is the schematic diagram of the insulation paper protection mechanism
Fig. 11 is the schematic diagram of the guard teeth inserted into each two adjacent slots.

### DETAILED DESCRIPTION

In order to make the invention more obvious and easy to understand, the embodiments are preferred and described in detail with the attached drawings as follows.

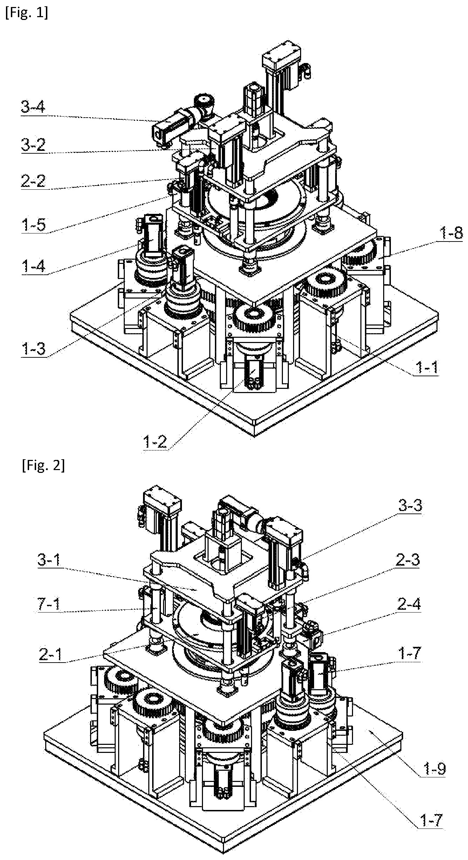

The invention provides an extensible rectangular wire motor stator automatic twist forming device, which is suitable for flexible automatic wire assembling, as shown in Fig. 1-fig. 7, and comprises a worktable 1-9, a worktable 1-9, a worktable 1-9, a worktable 1-7, a worktable 1-9, a worktable 1-7, and a worktable 1-9, an annular spindle device 6-1 is fixed on the worktables 1-9, a first rotating power device 1-1, a second rotating power device 1-2, a third rotating power device 1-3, a fourth rotating power device 1-4, a fifth rotating power device 1-5, a sixth rotating power device 1-6, a seventh rotating power device 1-7, and an eighth rotating power device 1-8 are sequentially arranged on the worktable 1-9 around the annular main shaft device 6-1. Each rotating power unit is provided with a high-precision servo actuator (which can be a servo motor) , and the top of each rotating power unit is provided with a pinion which is connected with the rotating end of the servo actuator.

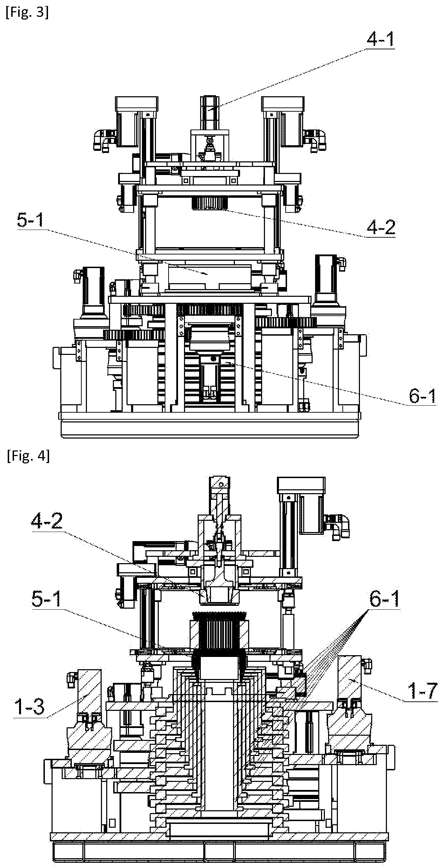

The annular spindle device 6-1 is composed of a plurality of annular spindles which can rotate and are connected with each other. As shown in Fig. 4, one end of the annular spindle device 6-1 is connected with a forming die device 5-1, the other end of the annular spindle is connected with a fan tooth, which is horizontally sheathed outside the annular spindle. The pinions on the rotating power device mesh with the sector teeth of different layers on the annular spindle device 6-1 respectively, and drive the annular spindle device 6-1 to drive the forming die device 5-1 to rotate. Since the corresponding sector teeth of each annular spindle are overlapped at different heights, the pinions on each corresponding rotating power unit are also arranged at different heights and do not interfere with the sector teeth at other positions. That is, the thickness of the pinion corresponds to the thickness of the sector teeth.

The forming mould device 5-1 comprises a plurality of forming moulds, each layer of the stator winding of the rectangular wire motor corresponds to a forming mould, and a plurality of wire inserting slots are arranged in the circumferential direction of each forming mould, the utility model is connected with the annular main shaft by a clamping groove type (each molding mold is provided with a boss 5-2, and each annular main shaft is provided with a groove 6-2, and the boss 5-2 is matched with the groove 6-2 to be clamped) , it is convenient and quick to change without fasteners.

The annular spindle is a tubular structure, and each annular spindle is corresponding to a forming die, which is used to drive the forming die to rotate along the circumferential direction of the stator of the hairpin motor. Each annular spindle was positioned and stacked layer by layer by means of bearing shoulder.

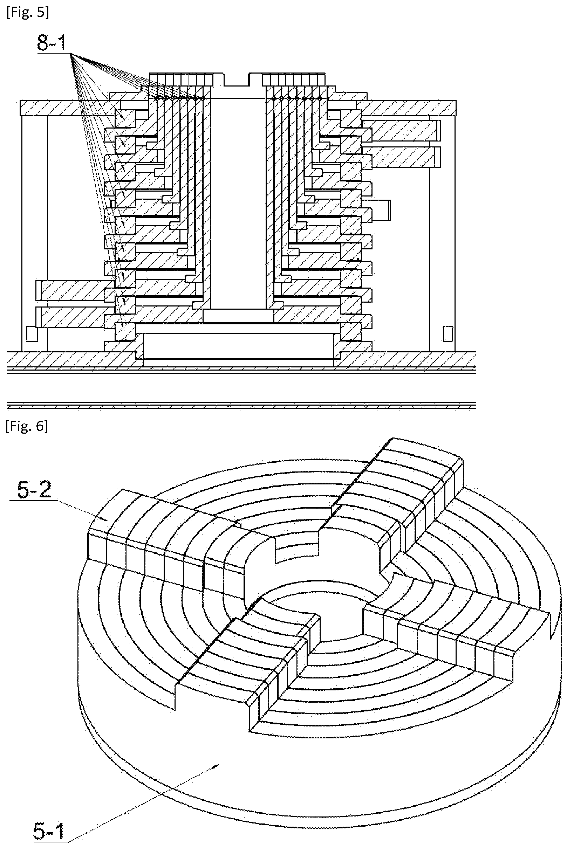

The annular spindle device 6-1 is a layer-by-layer nested structure, and the stators of the hairpin motor with 4-12 layers can be twistally shaped by controlling the rotating power device. Each layer of the ring spindle has an independent servo control to match the z axis, and the forming curve can be adjusted. Ring spindle unit 6-1 uses a coaxial nesting technique with high-precision bearing 8-1 positioning at the bottom and top of each ring spindle to ensure rotary accuracy and stability, as shown in Fig. 5.

The modular design is adopted, and different configurations can be selected according to the different layers of the hairpin of the stator product. The annular spindle device 6-1 is arranged below, each rotating power device is uniformly arranged around the annular spindle device 6-1, and the stator of the hairpin motor is arranged above the device of the invention, fully considering the ergonomics, it is convenient to observe during debugging.

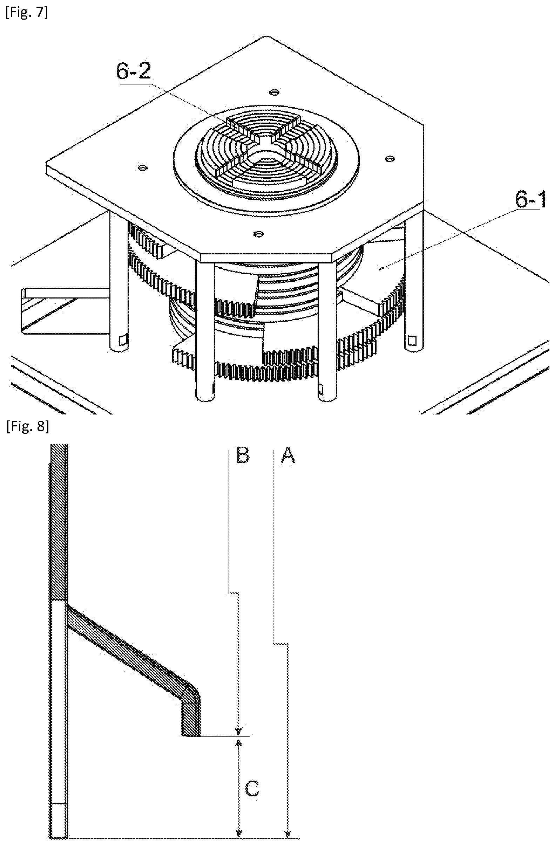

The twist forming mold can be changed quickly, and the forming mold device 5-1 and the ring spindle device 6-1 are connected by a clamping groove without fasteners, and the forming mold device 5-1 can be directly raised when changing, after detaching from the ring spindle device 6-1, the forming die device 5-1 for other products is replaced to meet the requirement of collinear production of different products, as shown in figs. 6 and 7.

Standardized design, standardized design, standardized design, each rotating power unit, annular spindle unit 6-1, insulation paper protection unit (i. e. lower end insulation paper protection unit 2-1 and upper end insulation paper protection unit 3-1) , insulation paper protection unit power unit and parts are interchangeable.

Each rotating power device corresponds to an annular spindle, which can independently drive a forming die to rotate.

The lower end insulating paper protection means 2-1 and the upper end insulating paper protection means 3-1 share a plurality of Z-direction guide rails 7-1, that is, both the lower end insulating paper protection mechanism 2-1 and the upper end insulating paper protection mechanism 3-1 can slide up and down along a plurality of z-direction guide rails 7-1 to ensure the coaxiality of the upper end and the lower end insulating paper protection mechanisms, as shown in Figure 2. One end of the plurality of Z-direction guide rails 7-1 is fixed at the top periphery of the annular spindle device 6-1, and the other ends of the plurality of Z-direction guide rails 7-1 are connected together by a fixing plate.

The lower end insulation paper protection mechanism 2-1 is arranged above the forming mold device 5-1, and the upper end insulation paper protection mechanism 3-1 is arranged above the lower end insulation paper protection mechanism 2-1, a through hole is arranged in the middle of the lower end insulation paper protection mechanism 2-1 and the upper end insulation paper protection mechanism 3-1. The through hole in the middle of the lower end insulating paper protection mechanism 2-1 can be passed by the lower end of the workpiece, but the upper end of the workpiece can not be passed; the through hole in the upper end insulating paper protection mechanism 3-1 can be passed by the driving end of the inner support power device 4-1.

In the embodiment, the driving end of the z-direction power device 3-2 of the first upper end insulation paper protection mechanism and the z-direction power device 3-3 of the second upper end insulation paper protection mechanism are connected with the upper end insulation paper protection mechanism 3-1, the first upper end insulating paper protection mechanism z-direction Power Device 3-2 and the second upper end insulating paper protection mechanism z-direction Power Device 3-3 are fixed on the fixing plate; The driving end of the z-direction power device 2-2 of the first lower end insulating paper protection mechanism and the z-direction power device 2-3 of the second lower end insulating paper protection mechanism are connected with the lower end insulating paper protection mechanism 2-1, the first lower end insulating paper protection mechanism z-direction Power Device 2-2 and the second lower end insulating paper protection mechanism z-direction Power Device 2-3 are fixed on the upper end insulating paper protection mechanism 3-1.

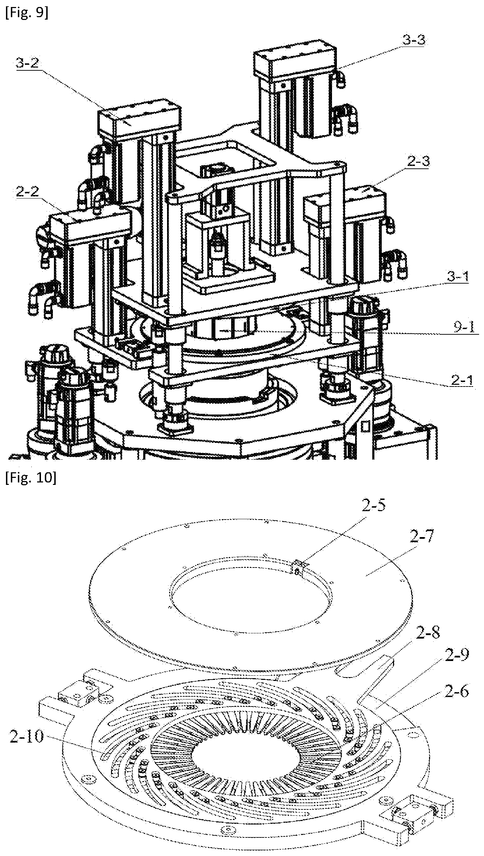

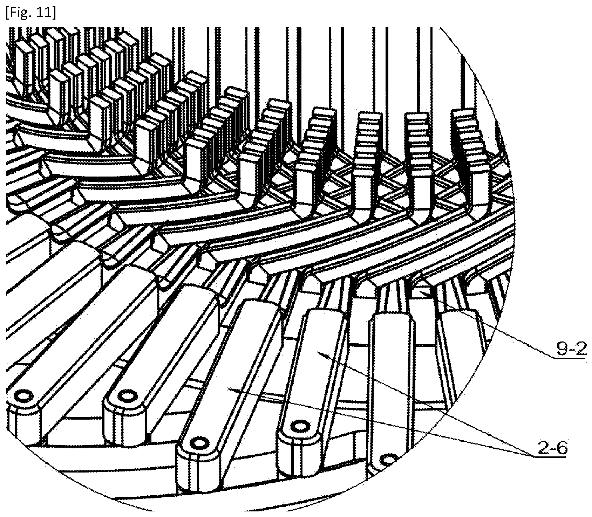

The Z-axis compensation mechanism is as follows: as shown in Figure 8, when the copper wire of the rectangular wire stator 9-1 is twisted and shaped, the copper wire is bent from the straight line a state to the B state, there is a height difference c from State A to state B, so the rectangular wire stator 9-1 needs to be lowered to compensate for the height difference c during twist molding. As shown in Figure 9, the rectangular wire stator 9-1 is placed on the lower end insulation paper protection mechanism 2-1 and positioned by positioning keys 2-5, as shown in Figure 11. When the twist is formed, the z-direction power device of the first lower end insulating paper protection mechanism 2-2 and the z-direction power device of the second lower end insulating paper protection mechanism 2-3 drive the lower end insulating paper protection mechanism 2-1 and the hairpin stator 9-1 to drop compensation height difference c. When the lower end insulation paper protection device 2-1 drops, the z-direction Power Device 3-2 of the first upper end insulation paper protection mechanism and the z-direction power device 3-3 of the second upper end insulation paper protection mechanism drive the upper end insulation paper protection mechanism 3-1 to descend synchronously.

The lower end insulation paper protection means 2-1 and the upper end insulation paper protection means 3-1 have the same structure, as shown in Fig. 10, and each comprises a chassis 2-9, a positioning disc 2-7 and a turntable 2-8 which are all provided with a through hole in the middle, the upper surface of the chassis 2-9 is provided with a circular groove matched with the positioning disc 2-7 and the rotary disc 2-8, wherein the positioning disc 2-7 and the rotary disc 2-8 are arranged in the circular groove of the chassis 2-9, the positioning disc 2-7 covers the top of the turntable 2-8. One end of the turntable 2-8 is arranged on a handle passing through the side of the chassis 2-9, and the turntable 2-8 is rotated around the center of the circle on the chassis 2-9 by shifting the handle, the locating keys 2-5 are arranged on the middle inner wall of the locating plates 2-7. The bottom of the circular groove on the chassis 2-9 is uniformly provided with a plurality of paper protecting tooth slots on the chassis 2-9 radius, and each paper protecting tooth slot is provided with a paper protecting tooth 2-6, the paper protecting tooth 2-6 can move along the radius direction of the chassis 2-9 in the paper protecting tooth groove, and the outer end of each paper protecting tooth 2-6 is provided with a roller whose central shaft is perpendicular to the paper protecting tooth 2-6. A plurality of penetrating arc-shaped holes are arranged on the disc surface of the turntable 2-8. One end of the arc-shaped holes is close to the circle center of the turntable 2-8, and the other end is far away from the circle center of the turntable 2-8. The rollers on each paper protecting tooth 2-6 are respectively arranged in an arc-shaped hole corresponding to the paper protecting tooth 2-6, rotate the rotary disk 2-8, and move along the arc-shaped hole, the paper protecting teeth 2-6 are driven to expand and contract along the radius direction of the chassis 2-9 in the paper protecting tooth groove.

Through the Z-axis compensation mechanism, the servo drive compensates the height change of the hairpin of the motor stator winding from the straight line state to the Z-shaped; in the insulation paper protection mechanism, a paper guard tooth 2-6 is inserted between two adjacent wire slots, as shown in Fig. 11, to avoid tearing of the insulating paper 9-2 during the forming process; The inner support mechanism 4-2 is used for tightening the iron core of the motor stator before forming to prevent the deformation of the iron core during forming.

The workpiece (i. e. , the rectangular wire stator 9-1) is placed on the lower end insulation paper protection mechanism 2-1, and the lower end insulation paper protection mechanism 2-1 is embedded with a bolt (i. e. , a positioning key 2-5) for positioning the workpiece. The lower end insulation paper protection mechanism power device 2-4 drives the insulation paper protection mechanism to insert the paper protection teeth 2-6 between each two adjacent wire slots.

The z-direction Power Device 3-2 of the first upper end insulation paper protection mechanism and the z-direction power device 3-3 of the second upper end insulation paper protection mechanism drive the upper end insulation paper protection mechanism 3-1 and the inner support mechanism 4-2 to descend to a preset position, the upper end insulation paper protection mechanism power device 3-4 drives the insulation paper protection mechanism to insert the paper protection teeth 2-6 between each two adjacent wire slots. The inner bracing power device 4-1 drives the inner bracing mechanism 4-2 to tighten the stator of the hairpin motor. The inner support mechanism 4-2 is arranged in the middle position of the bottom of the upper end insulation paper protection mechanism 3-1, and the driving end of the inner support power device 4-1 passes through the upper end insulation paper protection mechanism 3-1 and is connected with the inner support mechanism 4-2.

The first lower end insulation paper protection mechanism z-direction Power Device 2-2, the second lower end insulation paper protection mechanism z-direction Power Device 2-3 drive the lower end insulation paper protection mechanism 2-1, the z-direction Power Device 3-2 of the first upper end insulation paper protection mechanism and the z-direction power device 3-3 of the second upper end insulation paper protection mechanism drive the upper end insulation paper protection mechanism 3-1, the lower end insulation paper protection device 2-1 and the upper end insulation paper protection device 3-1 are lowered synchronously, and the workpiece is inserted into the forming die device 5-1.

The invention can be adapted to robot automatic feeding or truss manipulator automatic feeding and production line docking. When the layer number of the hairpin of the motor stator is increased, the molding model device 5-1, the annular spindle device 6-1 and the rotating power device can be increased, so as to realize the rapid adaptive transformation of the existing equipment.

## Claims

1. An extensible hairpin motor stator automatic twist forming device is **characterized in that** the device comprises a worktable (1-9) which is fixed with an annular spindle device (6-1) and a plurality of rotating power devices, wherein the worktable (1-9) is fixed with an annular spindle device (6-1) and a plurality of rotating power devices, a plurality of rotating power devices are arranged around the annular spindle device (6-1) , and a forming die device (5-1) is arranged above the annular spindle device (6-1) . The annular spindle device (6-1) comprises a plurality of annular spindles nested in layers, each layer of the annular spindle is connected with a rotary power device which independently drives the rotation of the annular spindle. The forming die device (5-1) comprises a plurality of forming dies, and each forming die is one-to-one corresponding to the layer line of the stator winding of the hairpin motor, each forming mould is matched with and detachably connected with a layer of annular main shaft, and a plurality of Z-direction guide rails (7-1) are fixed on the annular main shaft device (6-1) , the lower end insulating paper protection mechanism (2-1) and the upper end insulating paper protection mechanism (3-1) are arranged on a plurality of Z-direction guide rails (7-1) , and the lower end insulating paper protection mechanism (2-1) is arranged above the forming die device (5-1) , the upper end insulation paper protection mechanism (3-1) is arranged above the lower end insulation paper protection mechanism (2-1) , and the upper end insulation paper protection mechanism (3-1) is connected with the z-direction power device which drives the upper end insulation paper protection mechanism to slide up and down, the lower end insulation paper protection mechanism (2-1) is connected with the z-direction power device of the lower end insulation paper protection mechanism which drives the lower end insulation paper protection mechanism to slide up and down; the middle of the lower end insulation paper protection mechanism (2-1) is provided with a through hole which can only be passed by the lower end of the workpiece.

2. An extensible rectangular wire motor stator automatic twist forming apparatus, as described in claim 1, is **characterized in that** each forming die is provided with a boss (5-2) , a groove (6-2) is arranged on each annular main shaft, and a boss (5-2) of each forming die is matched and clamped with a groove (6-2) of the corresponding annular main shaft.

3. An extensible rectangular wire motor stator automatic twist forming apparatus, as described in claim 1, is **characterized in that** each said rotating power unit includes a servo actuator and a pinion, the pinion is connected with the rotating end of the servo actuator; one end of each annular spindle device (6-1) is connected with a corresponding forming die on the forming die device (5-1) ; The other end of each annular spindle is respectively connected with a fan tooth; the pinions on each rotating power device are respectively meshed with the fan teeth corresponding to different layers on the annular spindle device (6-1) .

4. The invention relates to an automatic twist forming device for a stator of an expandable hairpin motor, which is **characterized in that** the annular main shaft has a tubular structure, and each annular main shaft corresponds to a forming mold, the forming die rotates circumferentially along the stator of the hairpin motor, and each annular spindle is positioned and stacked layer by layer by means of bearing shoulder.

5. An extensible hairpin motor stator automatic twist forming device, as described in claim 1, is **characterized in that** high-precision bearings (8-1) for positioning are arranged at the bottom and the top of the annular spindle in each layer.

6. The invention relates to an automatic twist forming device for a stator of an expandable hairpin motor, which is **characterized in that** the other ends of the plurality of Z-direction guide rails (7-1) are connected together by a fixing plate; The upper insulating paper protection mechanism has at least two z-direction power devices and the lower insulating paper protection mechanism has two z-direction power devices The driving end of the z-direction power device of the upper end insulation paper protection mechanism is connected with the upper end insulation paper protection mechanism (3-1) , and the z-direction power device of the upper end insulation paper protection mechanism is fixed on the fixing plate; The driving end of the z-direction power device of the lower end insulation paper protection mechanism is connected with the lower end insulation paper protection mechanism (2-1) , and the z-direction power device of the lower end insulation paper protection mechanism is fixed on the upper end insulation paper protection mechanism (3-1) .

7. An extensible rectangular wire motor stator automatic twist forming apparatus, as described in claim 1, is **characterized in that** the lower end insulation paper protection mechanism (2-1) is embedded with a bolt for positioning the motor stator.

8. An extensible rectangular wire motor stator automatic twist forming apparatus, as described in claim 1, is **characterized in that**, a motor stator is arranged between the upper end insulation paper protection mechanism (3-1) and the lower end insulation paper protection mechanism (2-1) ; The upper end insulation paper protection mechanism (3-1) and the lower end insulation paper protection mechanism (2-1) are driven to clamp the motor stator located in the middle by the z-direction power device of the upper end insulation paper protection mechanism and the z-direction power device of the lower end insulation paper protection mechanism, the upper end insulating paper protection means (3-1) and the lower end insulating paper protection means (2-1) are moved in the direction of the forming die device (5-1) with the motor stator until the motor stator is pushed on the forming die device (5-1) .

9. An expandable rectangular wire motor stator automatic twist forming apparatus, as described in claims 1 or 8, is **characterized in that**, the middle position of the bottom of the upper end insulation paper protection mechanism (3-1) is provided with an inner support mechanism (4-2) , and the middle of the upper end insulation paper protection mechanism (3-1) is provided with a through hole for the driving end of the inner support power device (4-1) to pass, the driving end of the inner support power device (4-1) passes through the upper insulation paper protection mechanism (3-1) and is connected with the inner support mechanism (4-2) which is arranged in the iron core of the motor stator; The inner support power device (4-1) drives the inner support mechanism (4-2) to tighten in the motor stator.

10. An extensible rectangular wire motor stator automatic twist forming apparatus, as described in claim 1, is **characterized in that**, a power device (2-4) of the lower end insulation paper protection mechanism, a power device (3-4) of the upper end insulation paper protection mechanism, an insulation paper protection mechanism and paper protection teeth (2-6) are also included A power device (2-4) of the lower end insulation paper protection mechanism drives the insulation paper protection mechanism to insert the paper protection teeth (2-6) between each two adjacent wire slots; The power device (3-4) of the upper end insulation paper protection mechanism drives the insulation paper protection mechanism to insert the paper protection teeth (2-6) between each two adjacent wire slots.
